# EUROPÄISCHE PATENTANMELDUNG

(11) **EP 1 127 650 A2**
(43) Veröffentlichungstag der Anmeldung: **29.08.2001**
(21) Anmeldenummer: 01102938.6
(22) Anmeldetag: 08.02.2001
(51) Int. Cl.: B23K 9/32

(54) **Konische Knickschutzfeder für Schlauchpakete von Lichbogenhandschweissbrenner**

(30) Priorität: 26.02.2000 DE 20003602 U
(71) Anmelder: TBi Industries GmbH & Co. KG, 35463 Fernwald/Steinbach (DE)
(72) Erfinder: Bürkner, Gunnar, Dr., 01324 Dresden (DE)
(74) Vertreter: Zieger, Sieglinde, Dipl.-Chem. Petra & Zieger Patentanwälte

(57) **Zusammenfassung**

2.1.Die Erfindung betrifft eine Schutzeinrichtung für Schlauchpakete an Lichtbogenhandschweiß- und schneidbrennern. Konische Knickschutzfedern bilden einen äußeren Schutz und sind über dem Überzugsschlauch angeordnet. Sie haben den Nachteil, daß die Beweglichkeit des Schlauchpaketes während des Schweißprozesses eingeschränkt wird.
2.2. Erfindungswesentlich ist, daß die bekannte konische Knickschutzfeder am brennerseitigen Ende konvex gekrümmt ausgebildet ist und dadurch eine Kugel bildet. Das kugelförmige Ende der konischen Knickschutzfeder liegt in der Brennergriffschale und bildet mit der Kalotte ein Kugelgelenk. Die Drehbeweglichkeit und das Schwenken des Schlauchpaketes von Lichtbogenhandschweißbrennem während des Schweiß- oder - schneidprozesses ist unvergleichlich höher als bei bekannten Lösungen.
3.Die konische Knickschutzfeder wird insbesondere angewendet bei Lichtbogenhandschweiß- und -schneidbrennern.

## Beschreibung

Konisch verlaufende Knickschutzfedern sind für Schlauchpakete an Lichtbogenhandschweiß- und -schneidbrennern übliche Schutzeinrichtungen. Dabei werden die Knickschutzfedern auf einen Drehring außen aufgeschraubt und liegen als äußerer Schutz über dem Überzugschlauch des Schlauchpaketes.

Die Beweglichkeit des Schlauchpaketes wird von der Bewegungsfreiheit des Drehringes bestimmt und diese durch die aufgesetzte Knickschutzfeder wieder eingeschränkt.

Aufgabe der Erfindung ist, eine Befestigung für die Knickschutzfeder, die die Bewegungsfreiheit des Drehringes erweitert und das Handling des Schlauchpaketes während des Schweißens in alle Richtungen gewährleistet, zu entwickeln.

Die Aufgabe wird dadurch gelöst, daß die konische Knickschutzfeder an ihrem brennerseitigen Ende konvex gekrümmt ausgebildet ist und dadurch eine Kugel bildet. Diese Kugel liegt in der Brennergriffschale wie in einer Kalotte und bildet mit der Kalotte das Kugelgelenk. Das erfindungsgemäß gebildete Kugelgelenk aus Knickschutzfeder und Brennergriffschale ermöglicht eine Drehbeweglichkeit und ein Schwenken des Schlauchpaketes in einem weiteren Bereich als mit bekannten Lösungen und wird im folgenden Ausführungsbeispiel näher erläutert. Die Knickschutzfeder ist wie bekannt konisch ausgebildet. Am brennerseitigen Ende ist die Knickschutzfeder konvex gewölbt und bildet eine Kugel. Die Brennergriffschale ist in gleicher Form nach außen gewölbt und bildet eine kugelförmige Aufnahme, die Kalotte, von der das kugelförmige Teil der Knickschutzfeder schlüssig und beweglich aufgenommen wird. Anschließend an den kugelbildenden Teil der Knickschutzfeder ist in der Knickschutzfeder ein Klemmring angeordnet. Der Klemmring verjüngt sich in Richtung Schlauchpaket, vorzugsweise stufenförmig. Der Bereich des Klemmringes mit dem größeren Durchmesser ist auf seiner Außenfläche mit einem Gewinde versehen, auf das die Knickschutzfeder aufgeschraubt ist. Im Bereich mit dem kleineren Durchmesser ist zwischen Klemmring und Knickschutzfeder ein Überzugschlauch schlüssig verklemmt. Der Überzugschlauch schützt das in der Knickschutzfeder liegende Schlauchpaket. Die Kombination der verschiedenen Durchmesserbereiche des Klemmringes mit der teilweise aufgeschraubten Knickschutzfeder gewährleisten einen so festen Halt des Überzugschlauches, daß er bei den Dreh- und Schwenkbewegungen des Schlauchpaketes während des Schweißprozesses nicht herausgezogen wird. Eine vorteilhafte Wirkung der Erfindung ist, daß das Schlauchpaket mit dem Kugelgelenk problemlos um 360° gedreht und während des Schweißprozesses bis 90° geschwenkt werden kann und der Arbeitskraft das Handling wesentlich erleichtert wird.

## Patentansprüche

1. Konische Knickschutzfeder für Schlauchpakete an Lichtbogenhandschweißbrennern dadurch gekennzeichnet, daß
die Knickschutzfeder mit der Griffschale ein Kugelgelenk bildet.

2. Konische Knickschutzfeder für Schlauchpakete nach Anspruch 1 dadurch gekennzeichnet, daß
die Knickschutzfeder am brennerseitigen Ende konvex gekrümmt ausgebildet ist.

3. Konische Knickschutzfeder für Schlauchpakete nach den Ansprüchen 1 und 2 dadurch gekennzeichnet, daß
das konvex gekrümmte Ende der Knickschutzfeder eine Kugel bildet.

4. Konische Knickschutzfeder für Schlauchpakete nach den Ansprüchen 1 bis 3 dadurch gekennzeichnet, daß
die Brennergriffschale konvex gekrümmt ist und gleichzeitig die Kalotte bildet.

5. Konische Knickschutzfeder für Schlauchpakete nach den Ansprüchen 1 bis 4 dadurch gekennzeichnet, daß
das Kugelgelenk aus Knickschutzfeder und Brennergriffschale eine Drehbeweglichkeit von 360° und ein Schwenken um 90° gewährleistet.

6. Konische Knickschutzfeder für Schlauchpakete nach den Ansprüchen 1 bis 5 dadurch gekennzeichnet, daß
vor dem konvex gekrümmten Ende der Knickschutzfeder in der Knickschutzfeder ein Klemmring angeordnet ist.

7. Konische Knickschutzfeder für Schlauchpakete nach Anspruch 6 dadurch gekennzeichnet, daß
der Klemmring in Richtung Schlauchpaket sich verjüngend ausgebildet ist.

8. Konische Knickschutzfeder für Schlauchpakete nach Anspruch 7 dadurch gekennzeichnet, daß
der Klemmring in Richtung Schlauchpaket stufenförmig verjüngend ausgebildet ist.

9. Konische Knickschutzfeder für Schlauchpakete nach den Ansprüchen 6 bis 8 dadurch gekennzeichnet, daß
der abschließende Bereich des Klemmringes mit einem Außengewinde versehen ist.

10. Konische Knickschutzfeder für Schlauchpakete nach Anspruch 9 dadurch gekennzeichnet, daß
die Knickschutzfeder in diesem Bereich aufgeschraubt ist.

11. Konische Knickschutzfeder für Schlauchpakete nach den Ansprüchen 6 bis 10 dadurch gekennzeichnet, daß
in dem sich verjüngenden Teil des Klemmringes zwischen Knickschutzfeder und Klemmring ein Überzugsschlauch schlüssig haftend geklemmt ist.

12. Konische Knickschutzfeder für Schlauchpakete nach einem oder mehreren der vorangegangenen Ansprüche dadurch gekennzeichnet, daß
sie für Lichtbogenhandschneidbrenner verwendet wird.
